# EUROPÄISCHE PATENTANMELDUNG

(11) **EP 2 290 771 A2**
(43) Veröffentlichungstag der Anmeldung: **02.03.2011**
(21) Anmeldenummer: 10174168.4
(22) Anmeldetag: 26.08.2010
(51) Int. Cl.: H02G 3/30

(54) **Trägervorrichtung**

(30) Priorität: 01.09.2009 DE 202009011801 U
(71) Anmelder: Kunststoffwerke GGK GmbH & Co. KG, 35753 Greifenstein (DE)
(72) Erfinder: Müller, Eckhard, 35781 Weilburg an der Lahn (DE)
(74) Vertreter: Tappe, Hartmut

(57) **Zusammenfassung**

Die Erfindung betrifft eine Trägervorrichtung für einen Kabelkanal, insbesondere zur Wandbefestigung, wobei die Trägervorrichtung zwischenliegend einer Befestigungsbasis und einem Kabelkanal anordbar ist, wobei die Trägervorrichtung eine Befestigungseinrichtung (14) zur Befestigung der Trägervorrichtung an der Befestigungsbasis und eine Montageeinrichtung (20) zur Befestigung des Kabelkanals an der Trägervorrichtung aufweist, wobei die Montageeinrichtung so ausgebildet ist, dass zumindest zwei Kabelkanäle relativ zueinander parallel an der Montageeinrichtung befestigbar sind, wobei die Montageeinrichtung eine Montageebene (23) ausbildet und ein Halteelement aufweist, wobei das Halteelement relativ zu der Montageebene orthogonal angeordnet ist und eine Befestigungsebene (26) ausbildet.

## Beschreibung

Die Erfindung betrifft eine Trägervorrichtung für einen Kabelkanal mit den Merkmalen des Anspruchs 1.

Die aus dem Stand der Technik bekannten Kabelkanäle bestehen regelmäßig aus einem U-förmigen Profilelement aus Kunststoff und/oder Metall mit einer das Profilelement verschließenden Abdeckung und werden vorwiegend zur Verlegung von Kabeln oder Leitungen bei der Gebäudeinstallation eingesetzt. Die Kabelkanäle werden horizontal unter Fensterbänken, in Bodennähe, unter der Decke oder vertikal in Raumecken bzw. als Steigkanal an Wänden oder einem anderen Befestigungsuntergrund montiert. Weiter sind mehrzügige Kanäle mit einem oder mehreren Abdeckungen bekannt, die mehrere Aufnahmeräume zur Unterbringung verschiedener Kabel oder Leitungen, beispielsweise Kabel zur Stromversorgung und Datenkommunikation, aufweisen. Diese sogenannten Duo-Kanäle erlauben eine übersichtliche und sichere Trennung der verschiedenen Kabel bzw. Leitungen.

Die mehrzügigen Kanalunterteile weisen eine Reihe von Nachteilen auf. So sind diese vergleichsweise teuer und aufgrund ihrer Abmessungen und ihres Gewichts bei einer Montage schwierig zu handhaben. Auch sind sie nur aufwendig an spezielle Gebäudegegebenheiten anpassbar, insbesondere im Bereich von Verzweigungen oder Knickungen. Darüber hinaus wird eine Anzahl von Teilevarianten durch die Verwendung von mehrzügigen Kabelkanälen bei einer Gebäudeinstallation erhöht. Mehrzügige Kabelkanäle werden auch dann bei einer Gebäudeinstallation verwendet, wenn eine zukünftige, erweiterte Nutzung der Kabelkanäle bei der Gebäudeinstallation zu berücksichtigen ist, auch wenn möglicherweise zunächst einzügige Kabelkanäle im Rahmen einer aktuellen Nutzung ausreichend wären. Dadurch wird zwar das Gebäude flexibler nutzbar, jedoch führt dies zu höheren Anfangsinvestitionen bzw. einer erhöhten Kapitalbindung.

Der vorliegenden Erfindung liegt daher die Aufgabe zugrunde, eine Trägervorrichtung für einen Kabelkanal sowie eine Kabelkanalanordnung vorzuschlagen, die eine Herstellung bzw. Montage mehrzügiger Gebäudeinstallationen einfach und kostengünstig ermöglicht.

Diese Aufgabe wird durch eine Trägervorrichtung mit den Merkmalen des Anspruchs 1 und durch eine Kabelkanalanordnung mit den Merkmalen des Anspruchs 17 gelöst.

Die erfindungsgemäße Trägervorrichtung für einen Kabelkanal, insbesondere zur Wandbefestigung, ist zwischenliegend einer Befestigungsbasis und einem Kabelkanal anordbar, wobei die Trägervorrichtung eine Befestigungseinrichtung zur Befestigung der Trägervorrichtung an der Befestigungsbasis und eine Montageeinrichtung zur Befestigung eines Kabelkanals an der Trägervorrichtung aufweist, wobei die Montageeinrichtung so ausgebildet ist, dass zumindest zwei Kabelkanäle relativ zueinander parallel an der Montageeinrichtung befestigbar sind, wobei die Montageeinrichtung eine Montageebene ausbildet und ein Halteelement aufweist und, wobei das Halteelement relativ zu der Montageebene ortogonal angeordnet ist und eine Befestigungsebene ausbildet.

Mittels der Trägervorrichtung können jeweils einzügige Standardkabelkanäle so montiert werden, dass eine zwei- oder mehrzügige Kabelkanalanordnung ausbildbar ist. Dadurch wird eine Anzahl von Teilevarianten für eine Gebäudeinstallation nicht wesentlich erhöht. Auch kann eine Gebäudeinstallation zunächst einzügig und später bei Bedarf mehrzügig ausgebildet werden, wodurch sich die Investitionskosten verringern. Zusätzlich ermöglicht die Trägervorrichtung einen Ausgleich eventueller Wandunebenheiten durch Ausbildung eines Zwischenraums zwischen dem Kabelkanal und der Befestigungsbasis. Bei einer Montage von Kabelkanälen kann außerdem gegenüber einem mehrzügigen Kabelkanal ein geringerer Materialverschnitt anfallen, da die einzügigen Kabelkanäle leichter kombinierbar sind. Insbesondere das Halteelement erleichtert eine Montage der Kabelkanäle, da es eine Befestigungsebene ausbildet und so als ein Anschlag bzw. eine Montagehilfe für Kabelkanäle nutzbar ist. Es bedarf daher keiner besonderen Ausrichtung eines Kabelkanals an einer Wand bzw. relativ zur Montageeinrichtung der Trägervorrichtung, wenn der Kabelkanal bei einer Montage am Halteelement zur Anlage gebracht wird. Weiter kann ein zweiter Kabelkanal zur Ausbildung einer mehrzügigen Kabelkanalanordnung am ersten Kabelkanal zur Anlage gebracht werden.

In einer vorteilhaften Ausführungsform kann das Halteelement ein unteres Ende der Trägervorrichtung ausbilden. Die Trägervorrichtung kann dann insbesondere zur Ausbildung horizontaler Kabelkanalanordnungen verwendet werden. Demnach kann das Halteelement als ein Anschlag bzw. eine Auflage für einen Kabelkanal oder auch eine Wasserwaage zur Ausrichtung der Trägervorrichtung an einer Wand dienen. Das Halteelement kann somit als eine Montagehilfe dienen, da der Kabelkanal nicht notwendigerweise, wie bei einer Wandmontage ohne Trägervorrichtung, mittels Muskelkraft an einer Wand zur Montage fixiert werden muss.

Wenn das Halteelement aus einer Platte gebildet ist, kann eine Montage eines Kabelkanals noch weiter vereinfacht werden, da eine Platte eine vergleichsweise große Auflagefläche der Befestigungsebene zur Verfügung stellt. Darüber hinaus kann die Platte relativ dünn ausgebildet sein, so dass das Halteelement den Kabelkanal nur geringfügig überragt.

Die Befestigungseinrichtung der Trägervorrichtung kann aus zwei parallelen Laschen mit Durchgangsöffnungen zur Befestigung der Trägervorrichtung gebildet sein. Die Laschen können vorzugsweise in Längsrichtung der Trägervorrichtung an deren Seitenrändern verlaufen, so dass beispielsweise mittels Schrauben, eine einfache Befestigung der Trägervorrichtung an einer Wand oder einer Trägerkonstruktion möglich wird. Die Durchgangsöffnungen der Befestigungseinrichtung können als Langlöcher oder als eine Kombination von Langlöchern und Bohrungen ausgebildet sein, so dass sich die Trägervorrichtung leicht an der Befestigungsbasis ausrichten lässt.

Eine Montage von Kabelkanälen an der Montageeinrichtung der Trägervorrichtung kann ebenfalls vereinfacht werden, wenn in der Montageeinrichtung Durchgangsöffnungen zur Befestigung des Kabelkanals ausgebildet sind. Die Durchgangsöffnungen können vorzugsweise so positioniert sein, dass sie mit Durchgangsöffnungen von standardisierten Kabelkanälen fluchten. In einer besonders einfachen Variante einer Kabelkanalbefestigung können dann Schrauben, wie beispielsweise Blechschrauben, unmittelbar in die Durchgangsöffnungen eingeschraubt werden. Für eine besonders schnelle Montage können in den Durchgangsöffnungen Rastelemente zur Fixierung des Kabelkanals eingesetzt werden.

Wenn die Durchgangsöffnungen als Langlöcher ausgebildet sind, wird eine Verschiebung des Kabelkanals an der Trägervorrichtung ermöglicht. So Bedarf es keiner besonderen maßlichen Abstimmung der Trägervorrichtung auf den Kabelkanal in Längsrichtung des Kabelkanals, da durch die Langlöcher eine nachträgliche Justage ermöglicht wird.

In einer besonders vorteilhaften Ausführungsform kann die Montageeinrichtung Muttern umfassen, die in den Durchgangsöffnungen gehaltert sind. Für eine Montage eines Kabelkanals können Schrauben dann besonders gut verwendet werden. Die Muttern können beispielsweise Blechmuttern oder auch Muttern mit einem metrischen Gewinde sein. Eine derartige Verschraubung ermöglicht eine vergleichsweise stabile Befestigung eines Kabelkanals an der Trägervorrichtung.

Ein Einsetzen der Muttern in den Durchgangsöffnungen oder deren Verschiebung in den Langlöchern kann weiter vereinfacht werden, wenn die Muttern als Käfigmuttern ausgebildet sind. Eine Käfigmutter kann beispielsweise eine in einem Blechbiegeteil gehalterte Mutter sein, wobei das Blechbiegeteil so ausgebildet sein kann, dass es in Übereinstimmung mit den Durchgangsöffnungen diese leicht einsetzbar bzw. in diesen bewegbar ist.

Wenn die Durchgangsöffnungen Langlöcher sind, kann eine Verschiebung der Muttern in den Langlöchern ermöglicht werden, wodurch der Kabelkanal noch einfacher relativ zur Trägervorrichtung bei einer Montage ausgerichtet werden kann. Auch können in einem einzelnen Langloch mehrere Muttern gehaltert sein.

Um einen sauberen und bündigen Wandanschluss einer Kabelkanalanordnung zu gewährleisten, kann an der Trägervorrichtung eine Abdeckeinrichtung zur Abdeckung eines Zwischenraums zwischen der Befestigungsbasis und dem Kabelkanal aufnehmbar sein. Die Abdeckeinrichtung kann in Art eines Profilelements bzw. einer Leiste ausgebildet sein, die den Zwischenraum überbrückt und dicht an einer Wand und dem Kabelkanal anliegt. Auch kann die Abdeckeinrichtung flexibel ausgebildet sein, um eine Anpassung an unebene Befestigungsuntergründe bzw. variierende Zwischenraumabstände zu ermöglichen.

Vorteilhaft kann an der Montageeinrichtung eine Rastausnehmung und an der Abdeckeinrichtung eine Rastnase zur Befestigung der Abdeckeinrichtung an der Montageeinrichtung ausgebildet sein. Die Abdeckeinrichtung kann dann einfach durch Verrasten mit der Rastausnehmung mit der Montageeinrichtung verbunden werden.

Die Montageeinrichtung kann so ausgebildet sein, dass an der Montageeinrichtung zwei Kabelkanäle mit einer gemeinsamen Längsachse befestigbar sind. Die Trägervorrichtung kann demnach auch zur Verbindung zweier Enden zweier Kabelkanäle dienen, ohne dass besondere Verbindungselemente für die Kabelkanäle verwendet werden müssten. Wenn das Haltelement als eine Platte ausgebildet ist, können die beiden Enden der Kabelkanäle besonders einfach relativ zueinander ausgerichtet werden.

Um eine Anpassung der Trägervorrichtung an verschiedene Breiten von standardisierten Kabelkanälen bzw. eine Kombination von verschiedenen Kabelkanälen an der Trägervorrichtung zu ermöglichen, kann die Trägervorrichtung in vertikaler Richtung längenveränderlich ausgebildet sein.

Die Trägervorrichtung kann einen Trägerkörper aufweisen, der die Befestigungseinrichtung, die Montageebene und das Halteelement ausbildet.

Eine längenveränderliche Ausbildung kann einen Trägerkörper standardisierter Länge umfassen, der auf die gewünschte Länge gekürzt werden kann, beispielsweise durch Schwächungsnuten oder Ausnehmungen, die ein einfaches Ablängen von Teilen des Trägerkörpers ermöglichen. Auch kann der Trägerkörper aus mehreren Bauteilen zusammengesetzt sein, die relativ zueinander längsbeweglich sind und so eine Teleskopierbarkeit bzw. eine Anpassung einer Länge der Trägervorrichtung gestatten.

Der Trägerkörper bzw. die Trägervorrichtung ist besonders einfach ausbildbar, wenn der Trägerkörper aus einem Blechbiegeteil gebildet ist. Darüber hinaus ist der Trägerkörper dann besonders stabil und robust. Alternativ kann der Trägerkörper aus einem Kunststoffmaterial gebildet sein. Der Trägerkörper kann dann beispielsweise in einem Spritzguss- bzw. Extrodierverfahren besonders kostengünstig hergestellt werden.

Die erfindungsgemäße Kabelkanalanordnung umfasst zumindest zwei Trägervorrichtungen nach einem der Ansprüche 1 bis 16 und zumindest zwei Kabelkanäle, wobei die Trägervorrichtungen zwischenliegend einer Befestigungsbasis und den Kabelkanälen angeordnet sind, wobei die Kabelkanäle relativ zueinander parallel an den Trägervorrichtungen befestigt sind, und wobei Halteelemente der Trägervorrichtungen eine Befestigungsebene ausbilden.

Demnach sind die Trägervorrichtungen so an einer Befestigungsbasis angeordnet, dass die Halteelemente eine gemeinsame Befestigungsebene in horizontaler oder vertikaler Richtung bilden. Die Kabelkanalanordnung ist so besonders einfach ausbildbar, da nach einer Befestigung der Trägervorrichtungen lediglich die Kabelkanäle an den Trägervorrichtungen montiert werden müssen, ohne dass es dabei einer besonderen Ausrichtung und Positionierung der Kabelkanäle bedarf. Auch eine Wandmontage der Trägervorrichtungen wird erheblich vereinfacht, da diese in ihrem Abmessungen klein und leicht zu handhaben sind, wobei die Halteelemente zur Relativausrichtung der Trägervorrichtungen, beispielsweise unter Zuhilfenahme einer Wasserwaage, dienen.

Weiter kann die Kabelkanalanordnung eine Abdeckeinrichtung umfassen.

Weitere vorteilhafte Ausführungsformen einer Kabelkanalanordnung ergeben sich aus den Merkmalsbeschreibungen der auf den Vorrichtungsanspruchs 1 rückbezogenen Unteransprüche.

Im Folgenden wird die Erfindung unter Bezugnahme auf die beigefügte Zeichnung näher erläutert.

Es zeigen:
- **Fig. 1**: einen Trägerkörper einer Trägervorrichtung in einer per- spektivischen Ansicht;
- **Fig. 2**: eine Käfigmutter der Trägervorrichtung in einer perspekti- vischen Ansicht;
- **Fig. 3**: die Trägervorrichtung mit einem Kabelkanal in einer per- spektivischen Ansicht;
- **Fig. 4**: eine Kabelkanalanordnung in einer Vorderansicht;
- **Fig. 5**: die Kabelkanalanordnung aus **Fig. 4** in einer vergrößerten Darstellung;
- **Fig. 6**: die Kabelkanalanordnung aus **Fig. 4** in einer Seitenansicht;
- **Fig. 7**: eine weitere Ausführungsform einer Kabelkanalanordnung in einer perspektivischen Ansicht.

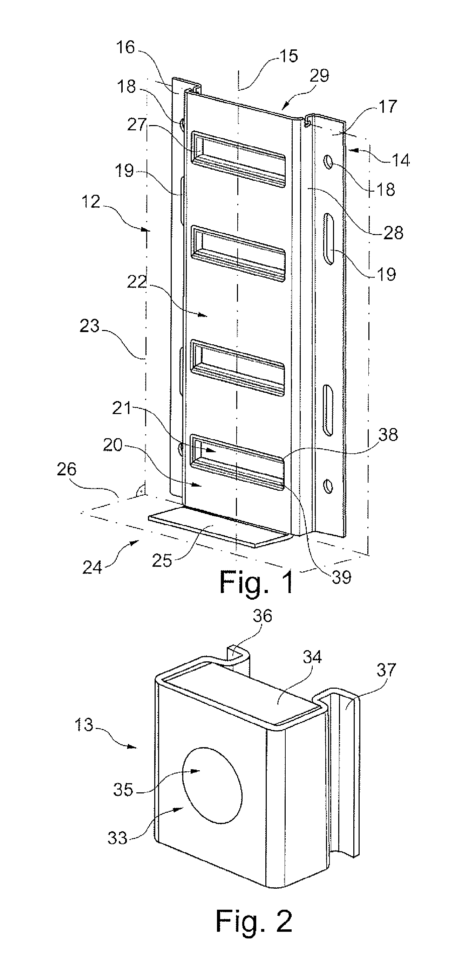

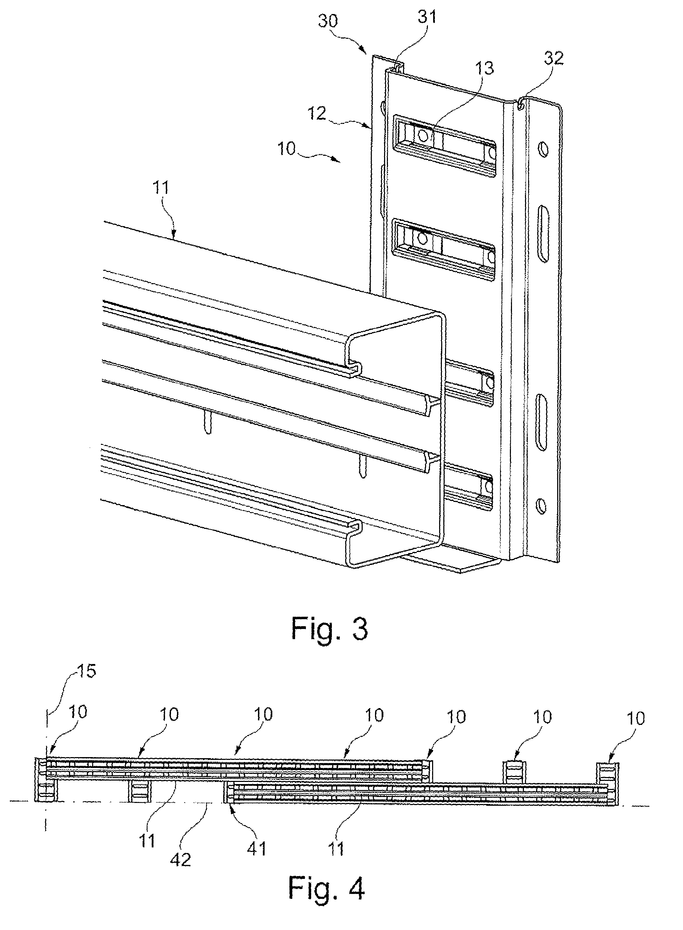

**Fig. 3** zeigt eine Trägervorrichtung 10 mit einem Kabelkanalunterteil 11, wobei in der **Fig. 1** ein Trägerkörper 12 und in der **Fig. 2** eine Käfigmutter 13 der Trägervorrichtung 10 separat dargestellt ist. Die Trägervorrichtung 10 weist eine Befestigungseinrichtung 14 zur Befestigung der Trägervorrichtung 10 an einer hier nicht gezeigten Befestigungsbasis auf, wobei die Befestigungseinrichtung 14 aus zwei relativ zu einer Längsachse 15 der Trägervorrichtung 10 symmetrisch angeordneten Laschen 16 und 17 gebildet ist. Die Laschen 16 und 17 weisen wiederum jeweils Durchgangsbohrungen 18 und Langlöcher 18 auf, in die hier nicht gezeigte Schrauben für beispielsweise eine Wandbefestigung eingesetzt werden können. Die Langlöcher 19 können insbesondere für eine Vormontage und Ausrichtung der Trägervorrichtung 10 genutzt werden. Weiter weist die Trägervorrichtung 10 eine Montageeinrichtung 20 zur Befestigung des Kabelkanalunterteils 11 auf. Die Montageeinrichtung 20 wird im Wesentlichen von rechteckigen Langlöchern 21, jeweils zwei darin eingesetzten Käfigmuttern 13 und einem Oberflächenelement 22 des Trägerkörpers 12, welches eine Montageebene 23 bildet, ausgebildet. An einem unteren Ende 24 der Trägervorrichtung 10 ist ein als Platte 25 ausgebildetes Halteelement der Montageeinrichtung 20 angeordnet, wobei die Platte 25 eine Befestigungsebene 26 ortogonal zu der Montageebene 23 ausbildet. Weiter weist der Trägerkörper 12 Stege 27 und 28 auf, welche die Laschen 16 bzw. 17 jeweils mit dem Oberflächenelement 22 verbindet. In den Stegen 27 und 28 sind jeweils an einem oberen Ende 30 der Trägervorrichtung 10 Rastausnehmungen 31 bzw. 32 ausgebildet. Die Stege 27 und 28 bzw. die Trägervorrichtung 10 bilden demnach einen Zwischenraum 29 zwischen dem Kabelkanalunterteil 11 und der hier nicht gezeigten Befestigungsbasis aus.

Wie in **Fig. 2** dargestellt, ist die Käfigmutter 13 aus einem Blechbiegeteil 33 und einer im Wesentlichen quadratischen Mutter 34 mit einem hier nicht näher dargestellten Gewinde gebildet. Das Blechbiegeteil 33 umgreift die Mutter 34 in Art einer Klammer und weist eine Durchgangsöffnung 35 für eine hier nicht dargestellte Schraube auf. Weiter bildet es zwei Führungslaschen 36 und 37 aus, welche in Führungsstege 38 bzw. 39 des Langlochs 19 eingesetzt sind, derart dass die Käfigmutter 13 in dem Langloch 19 längsbeweglich verschiebbar ist.

**Fig. 4** zeigt eine Kabelkanalanordnung 40 mit Trägervorrichtungen 10 und zwei Kabelkanalunterteilen 11, welche relativ zueinander parallel an den Trägervorrichtungen 10 befestigt sind. Die Kabelkanalunterteile 11 sind so an den Trägervorrichtungen 10 positioniert, dass ein Kanalende 41 an der Längsachse 15 der Trägervorrichtung 10 abschließt. Weitere, hier nicht dargestellte Kabelkanalunterteile können demnach an den Kanalenden 41 anschließen, so dass eine Trägervorrichtung 10 zwei Kabelkanalunterteile 11 verbindet. Die Trägervorrichtungen 10 sind weiter so angeordnet, dass deren Platten 25 eine gemeinsame Befestigungsebene 42 ausbilden, die eine gerade Montage der Kabelkanalunterteile 11 sicherstellt.

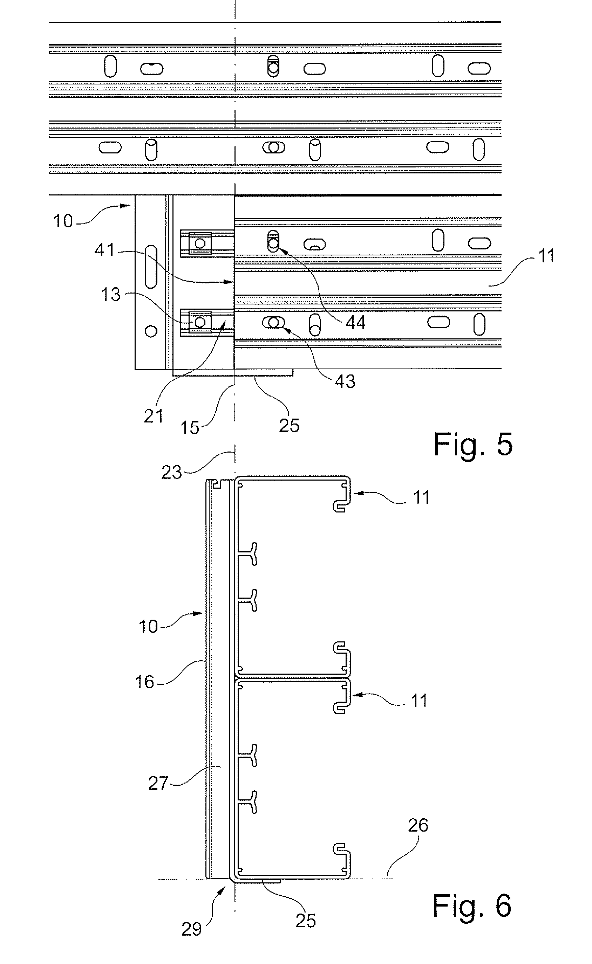

Wie näher in **Fig. 5** dargestellt, sind die Kabelkanalunterteile 11 so an der Trägervorrichtung angeordnet, dass Langlöcher 43 und 44 der Kabelkanalunterteile 11 mit den Durchgangsöffnungen 35 der Käfigmuttern 13 übereinstimmend zur Anlage gelangen, so dass eine Befestigung mittels hier nicht dargestellter Schrauben der Kabelkanalunterteile 11 an der Trägervorrichtung 10 einfach erfolgen kann. Da die Käfigmuttern 13 in den Langlöchern 21 verschiebbar sind, können die Käfigmuttern 13 auch entsprechend der Position der Langlöcher 43 und 44 ausgerichtet werden.

**Fig. 6** zeigt eine Seitenansicht der Kabelkanalanordnung 40 aus **Fig. 4**. Hieraus ist erkennbar, dass eine Länge der Trägervorrichtung 10 im Wesentlichen einer Höhe der zwei Kabelkanalunterteile 11 entspricht.

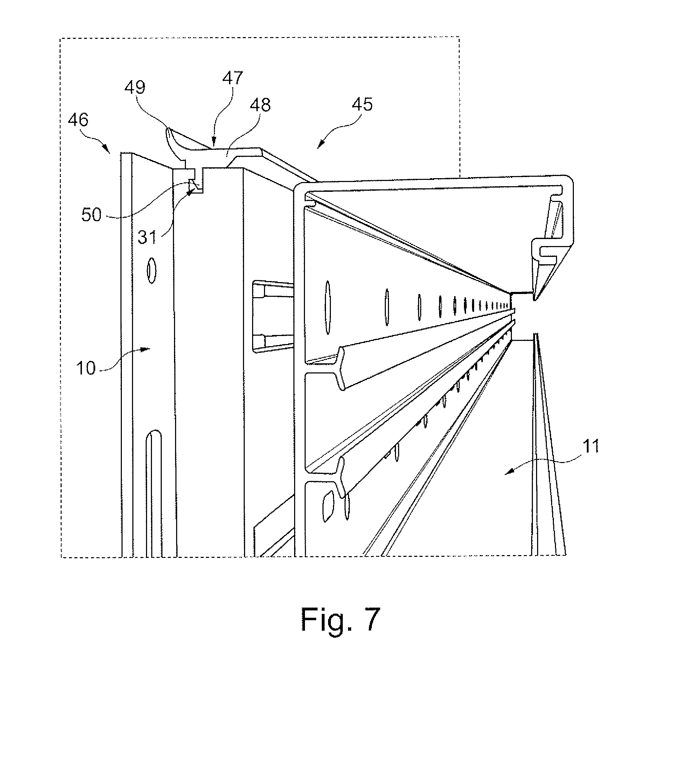

**Fig. 7** zeigt eine Kabelkanalanordnung 45 mit einer Trägervorrichtung 10 und einem Kabelkanalunterteil 11 auf einer Befestigungsbasis 46 in einer perspektivischen Ansicht. Die Kabelkanalanordnung 45 umfasst zusätzlich eine Abdeckeinrichtung 47, welche aus einer Abdeckplatte 48 mit einer Lippe 49 und einer Rastnase 50 gebildet ist. Die Abdeckeinrichtung 47 ist profilförmig ausgebildet, wobei die Rastnase 50 in die Rastausnehmungen 31 und 32 der Trägervorrichtung 10 eingesetzt und mit diesen verrastet ist. Die Abdeckeinrichtung 47 deckt den von der Trägervorrichtung 10 ausgebildeten Zwischenraum 29 zwischen der Befestigungsbasis 46 und dem Kabelkanalunterteil 11 ab.

## Patentansprüche

1. Trägervorrichtung (10) für einen Kabelkanal, insbesondere zur Wandbefestigung, wobei die Trägervorrichtung zwischenliegend einer Befestigungsbasis (46) und einem Kabelkanal (11) anordbar ist, wobei die Trägervorrichtung eine Befestigungseinrichtung (14) zur Befestigung der Trägervorrichtung an der Befestigungsbasis und eine Montageeinrichtung (20) zur Befestigung des Kabelkanals an der Trägervorrichtung aufweist, wobei die Montageeinrichtung so ausgebildet ist, dass zumindest zwei Kabelkanäle (11) relativ zueinander parallel an der Montageeinrichtung befestigbar sind, wobei die Montageeinrichtung eine Montageebene (23) ausbildet und ein Halteelement aufweist, wobei das Halteelement relativ zu der Montageebene orthogonal angeordnet ist und eine Befestigungsebene (26) ausbildet.

2. Trägervorrichtung nach Anspruch 1,
**dadurch gekennzeichnet,**
**dass** das Halteelement ein unteres Ende (24) der Trägervorrichtung (10) ausbildet.

3. Trägervorrichtung nach Anspruch 1 oder 2,
**dadurch gekennzeichnet,**
**dass** das Halteelement aus einer Platte (25) gebildet ist.

4. Trägervorrichtung nach einem der vorangehenden Ansprüche,
**dadurch gekennzeichnet,**
**dass** die Befestigungseinrichtung (14) aus zwei parallelen Laschen (16, 17) mit Durchgangsöffnungen (18, 19) zur Befestigung der Trägervorrichtung (10) gebildet ist.

5. Trägervorrichtung nach einem der vorangehenden Ansprüche,
**dadurch gekennzeichnet,**
**dass** in der Montageeinrichtung (20) Durchgangsöffnungen zur Befestigung des Kabelkanals (11) ausgebildet sind.

6. Trägervorrichtung nach Anspruch 5,
**dadurch gekennzeichnet,**
**dass** die Durchgangsöffnungen als Langlöcher (21) ausgebildet sind.

7. Trägervorrichtung nach Anspruch 5 oder 6,
**dadurch gekennzeichnet,**
**dass** die Montageeinrichtung (20) Muttern umfasst, die in den Durchgangsöffnungen gehaltert sind.

8. Trägervorrichtung nach Anspruch 7,
**dadurch gekennzeichnet,**
**dass** die Muttern als Käfigmuttern (13) ausgebildet sind.

9. Trägervorrichtung nach Anspruch 7 oder 8,
**dadurch gekennzeichnet,**
**dass** die Muttern in den Langlöchern (21) längsverschieblich anordbar sind.

10. Trägervorrichtung nach einem der vorangehenden Ansprüche,
**dadurch gekennzeichnet,**
**dass** an der Trägervorrichtung (10) eine Abdeckeinrichtung (47) zur Abdeckung eines Zwischenraums (29) zwischen der Befestigungsbasis (46) und dem Kabelkanal (11) aufnehmbar ist.

11. Trägervorrichtung nach Anspruch 10,
**dadurch gekennzeichnet,**
**dass** an der Montageeinrichtung (20) eine Rastausnehmung (31, 32) und an der Abdeckeinrichtung (47) eine Rastnase (50) zur Befestigung der Abdeckeinrichtung an der Montageeinrichtung ausgebildet ist.

12. Trägervorrichtung nach einem der vorangehenden Ansprüche,
**dadurch gekennzeichnet,**
**dass** die Montageeinrichtung (20) so ausgebildet ist, dass an der Montageeinrichtung zwei Kabelkanäle (11) mit einer gemeinsamen Längsachse befestigbar sind.

13. Trägervorrichtung nach einem der vorangehenden Ansprüche,
**dadurch gekennzeichnet,**
**dass** die Trägervorrichtung (10) einen Trägerkörper (12) aufweist, der die Befestigungseinrichtung (14), die Montageebene (23) und das Halteelement ausbildet.

14. Trägervorrichtung nach einem der vorangehenden Ansprüche,
**dadurch gekennzeichnet,**
**dass** die Trägervorrichtung in vertikaler Richtung längenveränderlich ausgebildet ist.

15. Trägervorrichtung nach Anspruch 14,
**dadurch gekennzeichnet,**
**dass** der Trägerkörper (12) aus einem Blechbiegeteil gebildet ist.

16. Trägervorrichtung nach Anspruch 14,
**dadurch gekennzeichnet,**
**dass** der Trägerkörper (12) aus einem Kuststoffmaterial gebildet ist.

17. Kabelkanalanordnung (40, 45) mit zumindest zwei Trägervorrichtungen (10) nach einem der Ansprüche 1 bis 16 und zumindest zwei Kabelkanälen (11),
**dadurch gekennzeichnet,**
**dass** die Trägervorrichtungen zwischenliegend einer Befestigungsbasis (46) und den Kabelkanälen angeordnet sind, wobei die Kabelkanäle relativ zueinander parallel an den Trägervorrichtungen befestigt sind, und wobei Halteelemente der Trägervorrichtungen eine Befestigungsebene (26) ausbilden.

18. Kabelkanalanordnung nach Anspruch 17,
**dadurch gekennzeichnet,**
**dass** die Kabelkanalanordnung (45) eine Abdeckeinrichtung (47) umfasst.
